# EUROPEAN PATENT APPLICATION

(11) **EP 1 538 074 A1**
(43) Date of publication of application: **08.06.2005**
(21) Application number: 04015221.7
(22) Date of filing: 29.06.2004
(51) Int. Cl.: B63B 35/81, G08C 17/02, G01S 13/93, B63B 35/73

(54) **Remote marine craft control system and methods of using same**

(30) Priority: 05.12.2003 US 527192 P
(71) Applicant: SSHL, INC., Lebanon Pennsylvania 17042 (US)
(72) Inventor: Sells, Robin, Redmond Washington 98052 (US); Raj, Nand, Seattle Washington 98125 (US)
(74) Representative: Holme, Edvard

(57) **Abstract**

A remote user-operated, user-transporting marine craft system is disclosed that includes a marine craft (20) having a hull and a propulsion device and including a wireless receiving device (112) adapted and configured to receive a signal component that operates and controls the propulsion device, and a remote control device (64) that is operatively and wirelessly associated with the wireless receiving device for transmitting a signal component, wherein the user controls movement of and is transported by the marine craft using the remote control device to generate and transmit the signal component to the receiving device to operate and control the propulsion device. Also disclosed are methods of water-skiing solo; water-skiing kits; a remote, user-operated marine craft drone system that carries a goal-specific device intended to carry out a task; remote control automatic retrieval device; remote control retrieval system and methods; remote-control, user-transporting combination; and the like.

## Description

### FIELD OF INVENTION

The invention relates to a remote, user-operated marine craft drone system that carries a goal-specific device intended to carry out a task, and in particular a remote user-operated, user-transporting marine craft system that is operated wirelessly and remotely wherein the user controls and is transported by the marine craft, and methods of using the same for activities such as water-skiing in solo fashion. Also disclosed are methods of water-skiing solo and water-skiing kits.

### BACKGROUND ART

Water skiing is a widely enjoyed recreational activity, particularly in warmer climates. A wider following might develop but for the safety requirements in many states and countries that require certain features on the water-skiing equipment and even requiring a drivers and/or spotter separate from the skier. Thus, skiers often needed to find one or two additional persons before proceeding to ski legally. Various disclosures teach certain equipment and methods for providing a skier with some degree of control.

U.S. Pat. No. 2,776,443 is believed to be one of the earliest teachings of a skier having any direct control over the craft being used for skiing. This document teaches a water skiing apparatus including a catamaran, powered by an outboard engine, and controlled by the water skier, being towed by this powered towing catamaran. Bowden wire cables were protected within a casing, along with a tow line cable, to serve in transmitting the water skier's initiated control movements to the controls on the catamaran.

U.S. Pat. No. 2,914,018 teaches a water-borne, motor-powered towing device for control by a water skier, who holds a tubular rod, rotatable from water level and upwardly in a vertical plane. Control cables for ignition, starter, and throttle, were installed in the tubular rod. The water skier, via this tubular rod and these controls, guided, steered, and further controlled the towing watercraft. In one embodiment, the tubular rod and controls were removed, a seat was installed, and a driver used this watercraft solely as a power boat.

U.S. Pat. No. 2,972,326 discloses a tow vehicle for water skiers, who had complete control of the tow vehicle via a pneumatic system having compressed air flowing in tubes within the tow rope. If the water skier fell, automatic controls cut the tow vehicle engine.

U.S. Pat. No. 3,062,172 describes a motor-driven water ski towing device having a rigid extending elongated handle used by the water skier in controlling the watercraft, in turn towing the water skier.

U.S. Pat. No. 3,181,493 discloses a water skiing apparatus having a stiff connecting element located between the boat and the water skier, and having controls used by the water skier to control the boat.

U.S. Pat. No. 3,745,962 describes a motorized ski towing unit having an outboard motor with a flotation unit essentially directly connected to water skis, whereby the water skier had control over the operation of the outboard motor. If the water skier fell, spring actuated valves closed the air intake to the carburetor of the outboard motor to stop the motor.

U.S. Pat. No. 3,763,817 describes a tow-craft for a swimmer. Water was taken inside the tow-craft and driven by a propeller located inside a tube inside the tow-craft, for discharge at the stem to propel the tow-craft. The swimmer being pulled held a handlebar and controlled the tow craft by operating controls located nearby the handlebar.

U.S. Pat. No. 3,828,717 discloses a water skiing apparatus to tow a water skier who had complete control of the operation of this water skiing apparatus. The tow line contained hydraulic lines serving to convey directional and speed signals, and an electrical circuit for starting and stopping the engine. A water pump was driven by the engine and the discharge of the water was directionally controlled by an adjustable discharge nozzle. When the towed water skier is away from shore and tired, he or she may climb aboard this boat and pilot this water skiing apparatus to shore.

U.S. Pat. Nos. 3,857,354 and 3,899,993 disclose a chassis for water ski towing device having an essentially rigid tow bar gripped by a water skier, who controlled this water ski towing device, as well as a tow bar assembly.

U.S. Pat. No. 5,041,040 discloses a motorboat controlled by a following water skier, when he or she is solo water-skiing, without the assistance of any driver. Optionally, a driver may operate the motorboat while towing a water skier, and an observing passenger is viewing the water skier. Motorboat operational controls, located both at the control center of the motorboat and on the skier's tow handle include: start and stop the motor; increase or decrease of throttle settings; select cruise speeds; turn left or right; actuate horn; automatic switches to stop engine when water skier removes his or her hands from tow rope handle and/or falls. The control signals are transmitted via electronic circuit wires extending throughout the center of a tow rope assembly and beyond. Optionally, control signals are transmitted by ultra high frequencies and related signal equipment.

U.S. Pat. No. 5,167,550 discloses a method and apparatus for converting a watercraft with an on-board engine and guidance controls into a drone remotely controlled through a towing apparatus by the skier riding on skis behind it. The control unit is secured to the watercraft, and the engine and guidance controls are operated by the tow handle, which is physically and electronically connected to the control unit.

WO 03/057558 discloses a motor boat having an underwater portion connected to an above-water portion that can be controlled by a water skier, or by a driver from the coast using a high frequency channel.

The '040 patent, as well as many others, have provided safety apparatuses for watercraft that are useful or could be useful in conjunction with water skiing.

U.S. Pat. Nos. 3,602,188; 4,782,784; and 4,640,213 each disclose a ski boat warning apparatus, which automatically raises a flag. They various teach the flag is raised when a water skier released the ski tow rope; directly by a driver and/or passenger in the towing watercraft; and in the absence of the water skier's applied tension force, when falling.

U.S. Pat. Nos. 3,798,631 and 4,624,141 each disclose a water skier alarm system that produces an audible alarm when a water skier falls, such as to warn the driver the water skier had fallen. The alarm was disclosed in one patent to be triggered upon loss of tension in the tow rope and/or upon the towrope handle dropping into the water to complete an electrical circuit.

U.S. Pat. No. 4,483,683 discloses a ski tow signal assembly, which could be actuated by the water skier's direct command, or indirectly when falling during waterskiing. The radio signals create a horn to sound and a rotary strobe light to function.

U.S. Pat. No. 4,689,611 discloses another alarm and communication system for water skiers for boats having a driver, where a battery powered radio receiver positioned on the boat is in communication with a transmitter antenna of sufficient wattage on the ski rope handle that is triggered when the skier does not have hold of the ski rope handle and is not supported above the water surface.

In addition to safety devices, other documents teach improvements for small powered watercraft, such as the watercraft with a thrust-reversing device in U.S. Pat. No. 4,708,671, an air intake arrangement for a small boat having an engine driving a water jet propulsion device in U.S. Pat. No. 4,568,293, and a deck construction of a small boat to support an operator thereof in a standing or seated position in U.S. Pat. No. 4,754,724.

Also, other documents are directed toward various other forms of remote control vehicles, such as the following. U.S. Pat. No. 4,270,307 teaches a remote controlled steerable amphibious toy that permits a player to steer a vehicle from a remote location. U.S. Pat. No. 4,729,333 teaches remotely-controlled surface-reference paravanes for use in towing objects in water at a controlled lateral offset from the pathway of the towing vessel, used to compensate for changes in towing vessel speed or wind variations, waves, or currents, to maintain the paravane within certain limits of lateral offset.

In spite of these prior disclosures, there has remained a need for a personal marine craft to serve a combination of needs, commencing with the primary need of the marine craft to be safely controlled directly by a user at a remote location for the pre-selected purpose.

### SUMMARY OF THE INVENTION

The invention relates to various embodiments involving mobile, powered vehicles that are remotely controlled. The mobile, powered vehicles of the invention are preferably marine craft and comprise a hull that is moved through water using a propulsion device. In particular, one embodiment involves a remote user-operated, user-transporting marine craft system that includes a marine craft having a hull that is moved through water using a propulsion device and including a wireless receiving device adapted and configured to receive a signal component that operates and controls the propulsion device, and a remote control device that is operatively and wirelessly associated with the wireless receiving device for transmitting a signal component selected from the group consisting of the very low frequency band, low frequency band, medium frequency band, high frequency band, very high frequency band, super high frequency band, extremely high frequency band, the infrared radiation band, and a combination thereof, wherein the user controls movement of and is transported by the marine craft using the remote control device to generate and transmit the signal component to the receiving device to operate and control the propulsion device. In one preferred embodiment, the remote user is a water-skier and the propulsion device includes a jet-pump engine combination.

In one embodiment, the remote control device and marine craft are positioned at least about 10 feet apart during operation of the jet-drive or other propulsion device. In another embodiment, the user is connected to the marine craft by a flexible connector device attached at a first end to the marine craft and adjacent the user at a second end. In a preferred embodiment, the connector device further includes a handle at the second end which the user can hold, a harness disposed about a portion of the user that is releasably connected to the second end, a ski chair at the second end in which the user can sit, or a combination thereof. In one embodiment, the remote control device is disposed adjacent the handle, disposed adjacent the harness, disposed adjacent the ski chair, worn by the user, or any combination thereof.

The control signals of the remote control device can be pre-selected or selected during operation to be within the very low frequency band is from about 3 kHz to 30 kHz, the low frequency band is from about 30 kHz to 300 kHz, the medium frequency band is from about 300 kHz to 3 MHz, and the high frequency band is from about 3 MHz to 30 MHz, the very high frequency band is from about 30 MHz to less than 300 MHz, the super high frequency band is from greater than 3 GHz to about 30 GHz, the extremely high frequency band is from about 30 GHz to 300 GHz, and the infrared radiation band is from about 300 GHz to 430 THz. In a preferred embodiment, the control signal is within the very high frequency and has a frequency range of about 30 MHz to 290 MHz.

In one embodiment, the remote control device is grasped by at least one hand and includes a kill switch, left and right turn controls, and a throttle to control the speed. In a preferred embodiment, the kill switch is configured to be automatically activated when the at least one hand releases the remote control device, the kill switch is triggered as desired, or both.

In one embodiment, the marine craft hull has a bottom portion including starboard and port sponson portions, a central tunnel portion, a propulsion water discharge portion having a water discharge opening portion that on average is substantially centered across a width of the hull transverse to the direction of forward marine craft movement. In another embodiment, the water discharge opening includes at least one multiple directional nozzle positioned about the centered propulsion water discharge portion. Any suitable hull (or chassis or air frame) can be used on the mobile, powered vehicle. Particularly suitable hull designs for marine craft alternatively can include a "V" hull, a hull including chines (i.e., a plurality of angled or ridged portions) to facilitate turning and movement in the water, and a tunnel hull or catamaran-type hull to inhibit or avoid the marine craft from pulling from side to side during turns. Any combination of hull types can be used, as well.

In another embodiment, the remote control device is operatively associated with flotation materials and external waterproofing materials sufficient to maintain the remote control device at least essentially free of water and floatable.

The invention also encompasses a mobile, powered vehicle, such as a marine craft, that includes a collision avoidance device that assists the vehicle to avoid one or more other objects and that includes radar adapted and configured to detect the location and speed of each object in a traveling path of the vehicle, preferably a marine craft, and an automatic propulsion control-device that receives the location and speed information from the radar and is configured and adapted to automatically control the speed and direction of the propulsion device to avoid each object in the traveling path of the vehicle.

In another embodiment, the wireless receiving device is associated with a removable component that releasably and electrically connects into a pre-wired electrical control system associated with the propulsion system, and wherein the removable component further includes one or more indicators that can be adapted and configured to provide a diagnostic capability to the marine craft. It is preferred that the removable component, and more preferably all electrical components, on the vehicle be modular and be adapted and configured for PLUG N' PLAY use to facilitate removal and/or replacement of any component that is malfunctioning or where an upgrade is desired.

The invention also relates to methods associated with, and optionally using, the mobile, powered vehicles of the invention, particularly marine craft or those remotely transporting a user. Remotely transporting the user refers to situations in which the user is not riding inside the hull or other frame of the vehicle, e.g., is being towed behind, adjacent, or with only a portion of the user's body contacting the hull such as grab handles or a kneeling board. A preferred method includes a method of water skiing solo by remotely controlling movement of a marine craft that is transporting a water skier by wirelessly transmitting from a skier-operated remote control device one or more control signals in the very low frequency band, low frequency band, medium frequency band, high frequency band, very high frequency band, super high frequency band, extremely high frequency band, the infrared radiation band, or a combination thereof, to control a propulsion device that provides movement to the marine craft so that the user exclusively controls movement of and is transported by the marine craft. Various embodiments above are applicable here, including the frequency bands of the control signal(s).

The invention also encompasses a solo water-skiing kit including a marine craft having a hull and including a propulsion device and a wireless receiving device adapted and configured to receive a signal component that controls the propulsion device, a remote control device for wirelessly and remotely transmitting the signal component which is selected from the group consisting of one or more signals in the very low frequency band, low frequency band, medium frequency band, high frequency band, very high frequency band, super high frequency band, extremely high frequency band, the infrared radiation band, and a combination thereof, a flexible tether of sufficient length to permit the skier to connect to the marine craft and of sufficient strength to permit water-skiing by the skier, and a handle connected to the flexible tether which the skier grasps, wherein the remote control device is associated with the handle for operation by the skier. In a preferred embodiment, the solo water-skiing kit further includes one or more water skis, a ski chair, a ski board, or a combination thereof.

The invention also encompasses a remote, user-operated marine craft drone system including a goal-specific device intended to carry out a task, a marine craft drone including a propulsion device for providing movement to the marine craft drone, a wireless receiving device adapted and configured to receive a radio-frequency-based signal component that controls the propulsion device and the goal-specific device, a hull sized sufficiently to contain the propulsion device and the goal-specific device but insufficiently sized to carry a person, and a remote control device that is operatively and wirelessly associated with the receiving device to transmit the signal component to operate and control the propulsion device to impart movement to the marine craft drone and to operate the goal-specific device.

In preferred embodiments, the goal-specific device includes a plurality of containers adapted and configured to collect and retain a plurality of water samples from adjacent the marine craft, or an attitudinally-inclinable nozzle operatively associated with a pump capable of collecting water from adjacent the marine craft and directing it through the nozzle in an upwardly inclined fashion at an adjacent work surface. In a more preferred embodiment, the goal-specific devices include a pump and nozzle that are of sufficient power and diameter to facilitate fire suppression when the adjacent work surface includes a burning obj ect.

In another preferred embodiment, the goal-specific device further includes a collision avoidance device that assists the marine craft to avoid one or more other objects and that includes radar adapted and configured to detect the location and speed of each of the one or more objects in a traveling path of the marine craft, and an automatic propulsion control-device that receives the location and speed information from the radar and is configured and adapted to automatically control the speed and direction of the propulsion device to avoid each obj ect in the traveling path of the marine craft.

The invention also encompasses a remote control retrieval device that includes a wireless radio frequency emitter that transmits a homing signal associated with automatic retrieval of a mobile, powered vehicle, and an initiation trigger that initiates the homing signal upon the occurrence of at least one pre-selected condition. In a preferred embodiment, the homing signal is very low frequency band, low frequency band, medium frequency band, high frequency band, very high frequency band, super high frequency band, extremely high frequency band, the infrared radiation band, or a combination thereof.

In one embodiment, the remote control retrieval device further includes an attachment device associated therewith that permits a user to wear the device. In a preferred embodiment, the pre-selected condition includes a manual trigger, a release device, termination of an associated control signal, or a combination thereof.

The invention also encompasses a remote control retrieval system that includes the remote control retrieval device, and a mobile, powered vehicle including a marine craft having at least one hull that is adapted and configured to receive the homing signal. In a preferred embodiment, the marine craft is adapted and configured to, upon a second pre-selected condition, activate or maintain an active propulsion system with sufficient power to return the marine craft to within a pre-selected distance from the homing signal.

In another embodiment, the homing signal operates at a first radio frequency and an associated remote control device having a control signal, which a user operates to control the marine craft, operates at a second radio frequency that is sufficiently different to minimize or avoid interference between the signals.

The invention further encompasses a method of remotely retrieving a powered vehicle automatically to within a pre-set distance by transmitting a radio frequency-based homing signal upon the occurrence of at least one pre-selected condition, wherein the homing signal is associated with a mobile, powered vehicle, and automatically activating, or maintaining an operating, propulsion system associated with the mobile vehicle to move the mobile vehicle toward the homing signal.

In one embodiment, the propulsion system is deactivated, preferably automatically, when the mobile vehicle reaches the pre-set distance from the homing signal. In a preferred embodiment, the propulsion system operates at an idle state during retrieval to propel the mobile vehicle at a sufficiently slow speed to ensure a user adjacent the homing signal remains safe. In a preferred embodiment, the propulsion system includes an jet-pump engine combination, preferably inboard, and the mobile vehicle comprises a marine craft. In another embodiment, the pre-selected condition is a water-skier-down event or a skier-initiated event to return the marine craft to a pre-set distance from the homing signal.

The invention also encompasses a remote-control, user-transporting combination including a mobile, powered vehicle that remotely transports a user, and a wireless, remote control article including a remote control device having a plurality of controls that is adapted and configured to be disposed adjacent to the user's hand and that is operatively and wirelessly associated with the mobile, powered vehicle that transports the user, wherein the remote control device is capable of transmitting one or more signal components using one or more radio frequencies when each of the controls is operated by the user to operate and control the vehicle and impart movement thereto.

In one embodiment, the controls include speed, direction, and failsafe controls to operate the mobile, powered vehicle. In a preferred embodiment, the controls include a user-initiated warning component associated with at least an aural or visual signal adjacent the mobile vehicle, a user-initiated fire suppression component associated with a fire suppression system aboard the mobile vehicle, or a combination thereof. In another embodiment, the remote control article further includes a flotation material and external waterproofing material sufficient to maintain the remote control device at least essentially free of fluids and floatable on adjacent fluids.

The invention also encompasses a user-transporting, remote operation system that includes a wireless, remote control article that includes a remote control device that is adapted and configured to be disposed adjacent to a user's hand and that is operatively and wirelessly associated with a mobile vehicle including a propulsion device that transports the user, wherein the remote control device transmits a signal component using one or more first radio frequencies, and a remote control retrieval device that includes a wireless radio frequency emitter that transmits a homing signal associated with automatic retrieval of the mobile, powered vehicle, and an initiation trigger that initiates the homing signal upon the occurrence of at least one pre-selected condition, wherein the remote control retrieval device is configured and adapted so that the propulsion device of the mobile vehicle will direct the vehicle to a pre-determined distance from the homing signal and automatically cease operation when reaching that distance.

### BRIEF DESCRIPTION OF THE DRAWINGS

Further features and advantages of the invention can be ascertained from the following detailed description that is provided in connection with the drawing(s) described below:
FIG. 1 is a rear perspective view of a marine craft with tow rope assembly and water skier's tow handle assembly of the invention;
FIG. 2 is a side view of a marine craft with tow rope assembly and water skier's tow handle assembly, and indicating, in dotted lines only in this view, the adjustable, multiple direction nozzle assembly of the propulsion water jet pump assembly and a retracted thrust reversal unit of the invention;
FIG. 3 is a bottom perspective view of a hull of the invention;
FIG. 4 is an enlarged perspective view of a water skier's tow handle assembly with control locations for maneuvering the marine craft and an automatic safety electrical plug removed when a water skier falls, which breaks an electrical circuit stopping the engine of the marine craft;
FIG. 5 is a block diagram illustrating, at the left side, a set of controls available to the water skier at his or her tow handle to create signals to be transmitted for reception at the marine craft, as shown at the right side of this FIG. 5 according to the invention;
FIG. 6 is a block diagram schematically showing how computer based control systems can be arranged in the tow handle, and the signals created are transmitted according t o the invention; and
FIG. 7 is a block diagram schematically illustrating a plurality of electrical circuits and a hydraulic system to control the propulsion system, and their interconnection with respect to maneuvering the marine craft according to the invention.

### DETAILED DESCRIPTION OF THE PREFERRED EMBODIMENTS

It has now been discovered that a remote user-operated, user-transported marine craft system can be provided according to the invention that includes a marine craft having a hull and including a propulsion device and a wireless receiving device adapted and configured to receive a signal component that controls the propulsion device, and a remote control device that is operatively and wirelessly associated with the marine craft and that transmits the signal component, wherein the user controls and is transported by the marine craft using the remote control device that is configured to generate a signal component to control the propulsion device. Optionally, other features onboard the marine craft can be controlled remotely and wirelessly, as well.

The hull of the invention can have any shape desired or selected that is available to those of ordinary skill in the art and is seaworthy or otherwise suitable for maritime use. Preferably, the hull is designed to provide as high a turning capability as possible while minimizing the sideways slippage of the craft. In an exemplary hull design, upper and lower hull portions are included and are either integrally formed or joined together to provide a waterproof compartment between the hull portions that can contain one or more of the propulsion system, safety equipment, and electronic controls. The space between the hull portions is preferably filled with a foamed material, more preferably a fire retardant foamed material, and most preferably a material that provides sufficient flotation capability to keep the craft above water even if it is filled with water. One or more hatches, typically in the upper hull portion, are preferably included to render anything in the compartment more easily accessible. The upper and lower hull portions can be formed from any suitable material, but one or both is preferably fiberglass, which is particularly suited to marine applications. The dual or tri-hull formations provide surprising benefits in that they increase the rigidity and stability of a marine craft having two or more hull portions, they decrease the noise from the propulsion system, they are visually more appealing, and they provide a superior seal at the cutout portions such as the engine compartment, battery compartment, and electrical component(s) compartment.

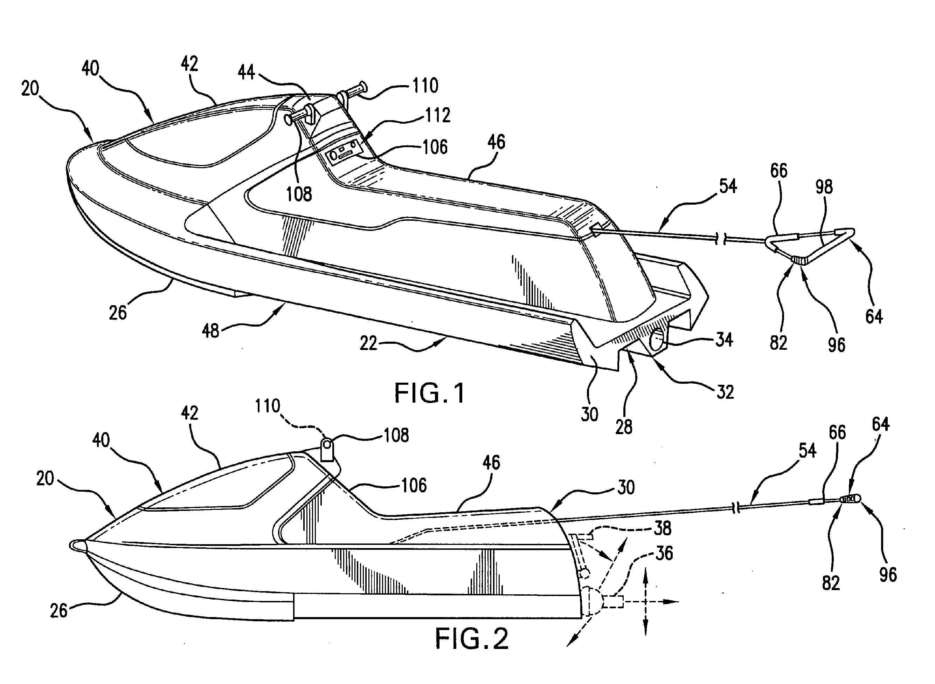

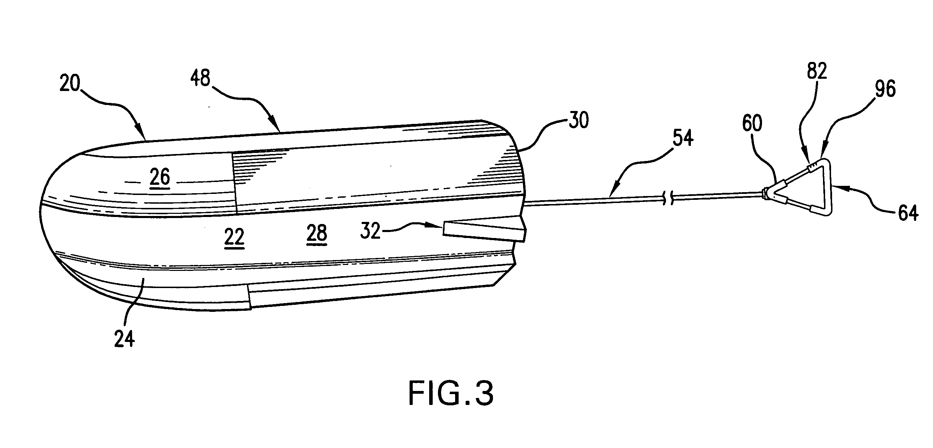

An exemplary lower hull portion design might be as follows. As shown in FIGS. 1 to 3, the marine craft 20 has a lower hull portion 22 with starboard and port sponson-like portions 24, 26 creating a central tunnel 28, interrupted nearer the stem and at the stem 30 by the propulsion water discharge portion 32. A propulsion water discharge opening 34 can be located at this portion 32, or a pair of openings (not shown) can be located preferably substantially symmetrically on either side of the portion 32. Adjacent each opening 34, an adjustable, multiple direction, market available nozzle assembly 36 can be provided, e.g., shown in FIG. 2 with dotted lines. Also preferably installed is a thrust reversing unit 38, shown in dotted lines in its upward retracted position in FIG. 2. It is lowered when needed to reverse the direction of the discharging propulsion water. Alternatively, the existing propulsion water discharge opening and propulsion device can be arranged to simply operate in reverse, thereby using the water discharge opening 34 as an intake and discharging water at a forward location on the marine craft.

The upper hull portion 40 can optionally have a spray and wind deflecting entry portion 42 gradually raising to a control mounting portion 44. The control mounting portion 44 is optional, and preferably no hardwired controls are on the marine craft. When hardwired controls are on the marine craft, they are generally disposed at the rear of the craft for a passenger using rearwardly projection grab handles (not shown) or resting on a kneeling portion (also not shown). Optionally, beyond and extending to the stem 30 is a seating portion 46 for a driver or other passenger. In another embodiment (not shown), the marine craft system is minimally equipped for passengers or riders, i.e., it is adapted to be passengerless, and does not contain seats on board for seated passengers, particularly those desiring to remain out of the water. This advantageously permits a lighter craft that does not require spray or wind deflecting entry portion 42, or the like, and thus the craft can have a more shallow draw that is capable of taking a water-skier or other user into shallow marshy type waters or over sand bar-laden territory to extend the available skiing area to that unavailable to conventional motorcraft requiring a passenger on board. The vertical profile of the marine craft can also be smaller, since hardwired controls, a seat, and the like can be excluded from the marine craft, which is then sufficiently sized to contain the necessary electrical components and the propulsion device. The marine craft of this embodiment can include a shelf at the rear on which a skier can kneel and optionally remain partly in the water kneel. The shelf preferably contains a padding portion, which can include a material formed from NEOPRENE or any other suitable foamed material(s). This is advantageous since many local laws prohibit water-skiing less than 100 feet, or some other pre-selected distance, from shore, and the user has the need to ride away from shore before engaging in water-skiing activity.

There is preferably a connecting device that permits the remote control device to be snapped into place or otherwise attached to the hull, such as for use when a skier prefers to depart from or return to a dock without being fully in the water. The control is still wireless, however, the user can now balance using the hull itself or by holding the remote control device securely attached to the hull. This shelf can be used in any other embodiment of the invention. It is also possible to include a ski rack or other ski-holding device on the marine craft, so that the skier can more easily kneel.

In one specific size embodiment of this marine craft 20, having the hull 48 made, e.g., of fiberglass laid up portions and molded plastic portions, with or without wood and/or other reinforcements, the marine craft length is about 6 feet to 12 feet, preferably about 7 feet to 10 feet, the width is about 2.5 feet to 6 feet, preferably about 3 feet to 5 feet, and the height is about 1.5 feet to 5 feet, preferably about 2 feet to 3.5 feet. This overall size can provide a suitable sized marine craft 20 useful for water-skiing, or for various other applications described herein. A passengerless marine craft tends to be smaller in this range, such as about 7 to 8 feet in length, about 3 to 4 feet in width, and 2 to 3 feet in height.

Inside the hull 48, preferably between an upper and lower hull portion, one or more compartments can be included into which can be disposed commercially available or custom built components, such as safety equipment and an engine (not shown). For example, in a specific embodiment, a three cylinder, two stroke, gas engine of about 638 cubic inches of displacement provides about 55 to 85 HP at about 6,750 rpm. The engine drives a suitable propulsion device, preferably meeting all applicable safety requirements, such as an axial flow jet pump. Suitable pumps discharge the propulsion water through a multiple direction nozzle assembly, i.e., preferably one or more nozzles that can be rotatably or otherwise directed, or a set of fixed nozzles pointing in various directions through which desired water flow can be discharged. Preferably, the propulsion system is inboard to minimize the risk of injury to the water-skier or others near the marine craft. The jet is preferably redirected to provide direction control and movement in the water, although a network of jets can be used and water rechanneled therethrough to provide for direction control if desired. The jet drive is preferably arranged to include the propeller internally in the nozzle, i.e., includes an impeller, to minimize accidents. The maximum speed of the marine craft is typically up to about 35 to 40 m.p.h.

The electrical components used to control the engine of a marine craft of the invention are preferably marine grade and are generally separate from the electrical board, such as an input/output module, receiving transmissions from a remote control device. Indeed, it is preferred that all electrical components on board the marine craft be marine grade, which provides more reliable components that can withstand saltwater environments. Preferably, the I/O module, the engine controller, or both, are preferably bricked or otherwise encased in a suitable water-proof resin with the exception of a pair of electrical leads, preferably marine grade, that readily permit connection to other electrical components necessary for operation of the mobile, powered vehicle according to the invention.

Optionally, but preferably, there is a constant siphon automatic bilge draining unit and a fuel tank onboard, such as between the lower and upper hull portions. The fuel tank can hold, e.g., about 4 to 30 gallons, preferably about 5 to 15 gallons of fuel. An exemplary fuel tank includes 6 gallons. A reserve portion of fuel can be held in an adjacent or separate compartment for emergency use until additional fuel can be obtained.

For marine craft use in connection with water-skiing, the remote control system preferably operates with a control signal selected from the group consisting of the very low frequency band, low frequency band, medium frequency band, high frequency band, very high frequency band, super high frequency band, extremely high frequency band, the infrared radiation band, and a combination thereof. Preferably, the very high frequency band is most useful in one embodiment as this band operates well over the distances of about 20 to 300 feet, which is the typical separation of marine craft and skier while water skiing.

In other embodiments where the user is remotely located, any frequency signal or combination thereof may be used for remote control. The same frequencies as for water skiing may be more preferred depending on the application and distance of the user from the marine craft.

The remote control system preferably uses one or more integrated circuits ("IC" or "chip"), which can be coded to transmit to, or otherwise operatively associated with, the wireless receiving device on the marine craft that is adapted and configured to receive the signal component that controls the propulsion device. The wireless receiving device is onboard the mobile, powered vehicle and is operatively associated with a programmable logic control ("PLC") or other computer equipment to facilitate signal and control distribution to the various parts of the mobile vehicle.

Preferably, any suitable flexible tether is used to connect the skier and marine craft that has sufficient tensile strength to pull a skier or user with equipment behind an operating craft. The skier can also wear a harness with a para-sail or other parachute type device, for example, and use the marine craft to soar upwards into the air so long as the marine craft moves rapidly enough to provide sufficient lift. A conventional connection can be used between skier and marine craft, for example, a tow rope that contains braided strands of nonconductive plastic, fiberglass, or other natural or synthetic fabric materials, or any combination thereof, suitable for withstanding salt water. An exemplary tether material includes one or more of the class of polyamides, such as a NYLON. The flexible tether, or connection, of skier to marine craft is preferably at least essentially metal-free, or entirely metal-free, such that it is not capable of carrying electrical control signals. This advantageously avoids the dangers of electrocution, shock, and metal corrosion that is common in and around aqueous environments, particularly salt water, where water skiing typically occurs.

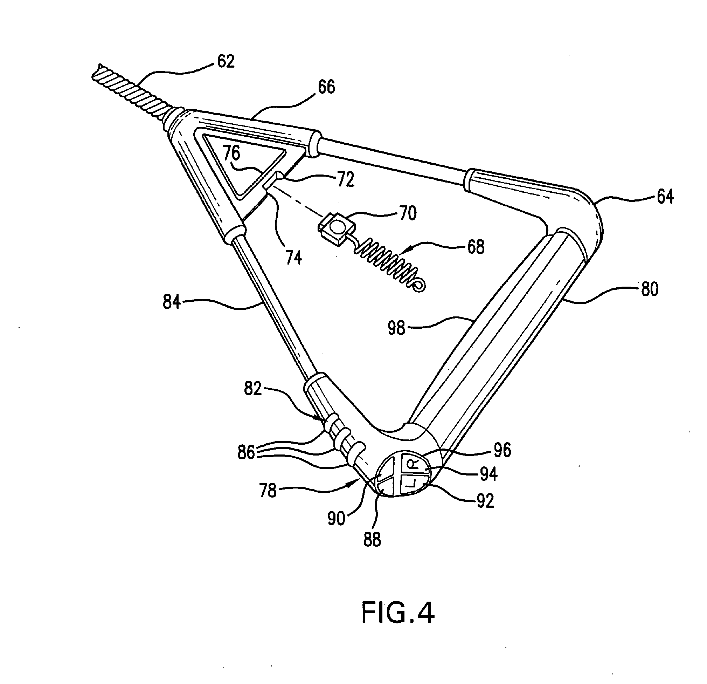

The water skier's tow handle 64 can be of any suitable size and shape to facilitate skiing or other marine craft operation, but preferably is triangular in configuration in one embodiment, as illustrated in FIG. 4. In the apex portion 66 of this tow handle, the overall tow rope assembly 54 can be well secured to the flexible tether that provides connection to the marine craft. A preferred handlebar shape is an arc with controls disposed on the outer, or convex portion of the handlebar. Thus, the handlebar can serve as a remote control device and the flexible connector can be a conventional tow rope that physically (but not electronically) attaches the handlebar to the vehicle to transport the user.

In the embodiment depicted in FIG. 4, this apex portion contains the remote-control transmitter that the user operates to remotely, wirelessly, control various aspects of operation on-board the marine craft. For example, secured at this apex portion 66 can be an engine stop lanyard 68 that is tethered to the water skier or is a closed circuit while the handle is grasped by the skier, so when the skier falls or otherwise drops this tow handle, the plug portion 70 of this lanyard 68 is pulled clear of the socket 72 on the tow handle 64. This interrupts the ignition circuit 74, thereby serving as a kill switch 76.

At one comer 78 of the base 80 of this triangularly configured tow handle 64 is an arrangement of the water skier's overall controls 82 for remotely operating the marine craft 20. Depending on whether a water skier is left or right handed, these overall controls 82 can be positioned either to port or starboard locations, upon convenient rotation of the tow handle 64. Any set of controls can be included on the remote-control panel. In one embodiment, along a triangular side 84 of the tow handle 64, is a set 86 of three preset speed selectors to be alternately depressed by the water skier to select a water skiing cruising speed. Alternatively, speed up and down rocker switches could instead be used (not shown), and these can even be operatively associated with an electronic memory device so that multiple actions can be taken and the equipment will queue the commands and execute them as rapidly as possible. At the juncture or comer 78 of this triangular side 84 and the base 80 of the triangular shaped tow handle 64, can be disposed four closely spaced selectors. These can include a horn selector 90, a left turn selector 92, a right turn selector 94, and an optionally selected fourth control 88, such as a kill switch. This grouping 96 of these four selectors can also be referred to as an ambidextrous thumb control grouping 96. Extending across the base 80 of the triangular tow handle 64 can be disposed a switch bar 98, which is kept depressed by the water skier during his or her controlled water skiing time. When the user falls and releases tow handle 64, switch bar 98 can be configured to move outwardly to break the ignition circuit thereby becoming an emergency kill switch bar 98. The tow handle 64 preferably includes sufficient flotation material to keep it afloat if dropped in the water, and preferably contains sufficient waterproofing material to protect the remote and other electronic controls 82.

A variety of safety or convenience devices can be included in the marine craft system of the invention. For example, a signal flag can be included, such as positioned on a pivotally mounted, optionally retractable, flag staff. The positioning and features of this flag is preferably arranged to comply with local laws. Generally, the signal flag is raised when a water skier has fallen into the water. In the preferred embodiment, the flag is associated with and preferably attached to, an antenna that also receives the control signals from the remote control device and the optional but preferred remote retrieval package. These signals can be received even when the antenna is in a retracted, or down, state. The flag raising is preferably automatic using conventional devices as described in the background of this application, such as when the tension load ceases in respect to the overall tow rope assembly, or by any other suitable system. An audible component or additional visual component (such as flashing or strobe lights) can optionally, but preferably, be operatively associated with the safety flag. Preferably, these additional or alternative safety features can be automatically activated by the same mechanism as described for the signal flag, or they can be time delayed for about 2 to 20 minutes, preferably about 3 to 10 minutes, after the engine is cut during operation, i.e., not when a key is removed from the boat but when the kill switches or other safety devices terminate operation of the motor.

The remote control device is typically operated at least about 10 feet, preferably at least about 20 feet away from the marine craft itself. It can take any suitable shape and use any pre-selected desirable buttons, switches, or the like for controlling at least the propulsion system and safety equipment on board the marine craft.

For example, a control console 106 optionally mounted in the control mounting portion 44 of the upper hull portion 40 presents information to an optional driver or the water skier as to the quantity of fuel, engine temperature, etc. Also, at this control mounting portion 44, can be disposed starter switches, engine stop switches, throttle lever, and cruising speed controls (not shown), and the directional control handles 108, 110.

An overall preferred control system 112 can provide the water skier full control of the towing marine craft 20 at all times during solo skiing or when a passenger is on board the marine craft. Then, when the water skier is separated from the tow handle 64 and the overall tow rope assembly 54, the marine craft 20 will automatically stop as the lanyard or other kill switch is activated, optionally but preferably a signal flag (not shown) will be automatically raised, and if the engine of the marine craft 20 is not started within a preset time, often three minutes, five minutes, or ten minutes, an audible component on the marine craft 20 sounds, such as a horn. This audible component can typically follow a distinctive distress pattern of repeating sounds.

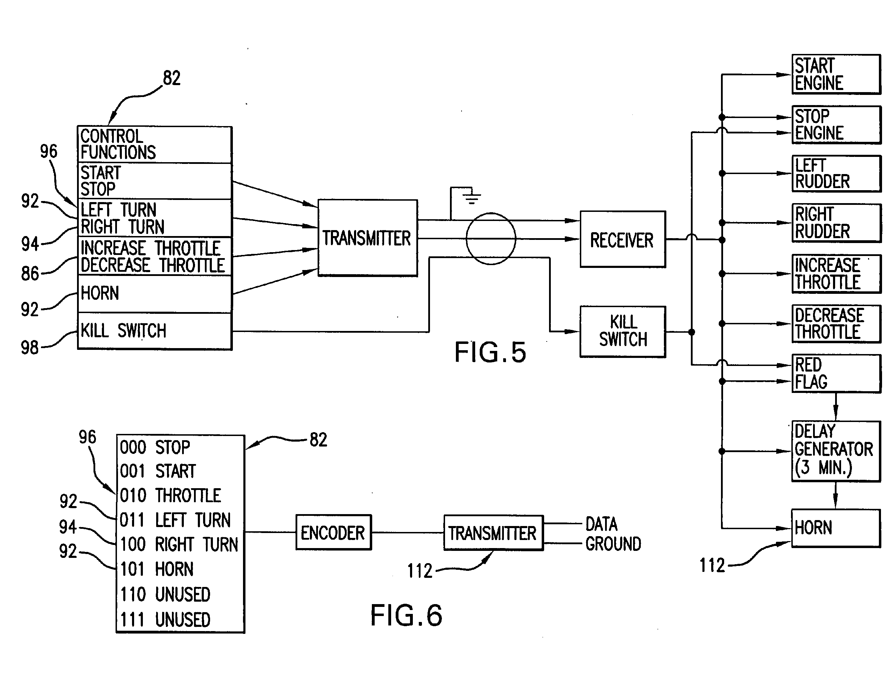

In FIG. 5, a block diagram illustrates on the left side a suitable selection of control functions available to the water skier, such as adjacent the tow handle. These can include start and stop engine; left and right turn; increase or decrease engine throttle settings; horn button; and a kill switch. Other controls are envisioned and described herein, although they are not shown in FIG. 5. The signals selectively initiated are transmitted wirelessly to a remote signal receiving device located adjacent the marine craft that is operatively associated with the propulsion system and other systems of the marine craft.

On the right side of this FIG. 5, the corresponding received signals are respectively distributed within the marine craft 20 or other mobile vehicle, typically being routed through or according to the control of a PLC, IC, or other similar computing equipment. Each of the commands can also be arranged to occur following a short, pre-selected delay period such as about 0.5 to 4 seconds, preferably about 1 to 2 seconds. This can provide the user with time to cancel or modify undesired, accidental commands.

In FIG. 6, information is presented by block diagram and digital designations to illustrate how a preferred computer-based control system can operate. The water skier's operation of the grouping of the controls creates analog or digital wireless signals, which are encoded and transmitted by any suitable frequency energy to be received and decoded and utilized (not shown). The transmission is preferably digital, and if the signals are analog then a suitable analog-to-digital conversion device is employed at the remote control device prior to signal transmission, and a corresponding digital-to-analog conversion device can optionally be present in line following receipt of the signal component(s) at the marine craft. Preferred frequencies include: very low frequency band, low frequency band, medium frequency band, high frequency band, very high frequency band, super high frequency band, extremely high frequency band, the infrared radiation band, and combinations thereof.

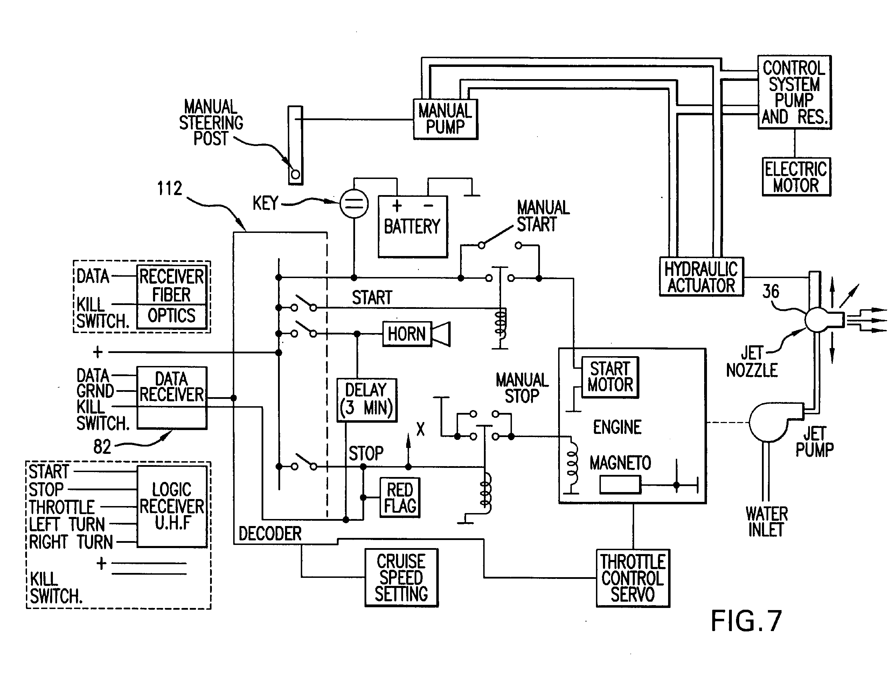

In FIG. 7, one possible interrelationship of the electrical and electronic controls with various electrical-mechanical components, and with various hydraulic components, is illustrated. See also FIGS. 5 and 6.

On the left middle portion of FIG. 7 is an electrical signal data receiver, shown operatively related to the overall control circuits. On this left side at the top area is a diagram indicating a less preferred mode whereby if more resilient fiber optical cables are available, then some fiber optic carried signals could be alternately utilized. On the left side at the bottom area is an indicating diagram indicating how certain frequencies, particularly of digital data, could be alternately utilized. The wireless transmissions can be digital or analogue.

In the central area of FIG. 7 is a circuit diagram of the electrical circuits, and related equipment, which are all installed aboard the marine craft 20. At the top area and down along the right side area of this FIG. 6 is a hydraulic diagram of the controls, which are utilized to change the direction of the jet nozzle, through which the propulsion water is discharged. The interrelationship of the signals received from the water skier to cause changes of the hydraulic directional control system, is undertaken in the illustrated control system of the electrical powered hydraulic pump, adjacent the oil reservoir. Directional oil flow valves in this control system will be operated, ultimately causing directional changes in the position of the propulsion jet nozzle.

Essentially, wherever possible, market available components of all kinds will be utilized to meet the objectives in providing this marine craft, without driver, controlled by a water skier skiing, or optionally controlled by a driver.

In a preferred embodiment, the invention encompasses a remote user-operated, user-transported mobile, powered vehicle, preferably a marine craft system that includes a marine craft having a propulsion device and a wireless receiving device adapted and configured to receive a signal component that controls the propulsion device, as well as a remote control device that is operatively and wirelessly associated with the marine craft and that transmits the signal component to control the marine craft. The mobile, powered vehicle could instead include a drone tank, a mine-clearing land-based drone vehicle, or the like. The signal component can include any form of sending wireless control signals, including radio frequency, microwave, acoustic, laser, satellite, or a combination thereof. The signal component is preferably selected from the group of radio frequencies including very low frequency band, low frequency band, medium frequency band, high frequency band, very high frequency band, super high frequency band, extremely high frequency band, the infrared radiation band, and a combination thereof. In this embodiment, the user controls and is transported by the marine craft using the remote control device that is configured to generate the signal component to control the propulsion device.

Generally speaking, as referred to herein in connection with the invention, the radio frequencies are as follows: the very low frequency band is from about 3 kHz to 30 kHz, the low frequency band is from about 30 kHz to 300 kHz, the medium frequency band is from about 300 kHz to 3 MHz, and the high frequency band is from about 3 MHz to 30 MHz, the very high frequency band is from about 30 MHz to less than 300 MHz, the super high frequency band is from greater than 3 GHz to about 30 GHz, the extremely high frequency. band is from about 30 GHz to 300 GHz, and the infrared radiation band is from about 300 GHz to 430 THz. Preferably, the very high frequency band is selected for transmitting signals to the marine craft and has a frequency range of about 30 MHz up to 295 MHz, more preferably about 30 MHz up to about 280 MHz. Advantageously, the VHF band is sufficiently distinct from any UHF signals to minimize or avoid interference between differing control signals, such as UHF signals at 900 MHz from nearby cordless telephones.

In a preferred embodiment, the remote control and remote retrieval devices can each include a suitable signal component. Typically, these signal components are sufficiently different to minimize or avoid interference between the signals. Preferably, the homing signal of the remote control retrieval device operates at a first radio frequency and an associated remote control device operates at a second radio frequency that is sufficiently different to minimize or avoid interference between the signals. For example, the remote control device can operate at about 310 MHz, about 900 MHz, or in the FM or AM range, and the remote control retrieval device can operate in the VHF range or another of the above noted ranges to minimize interference, or vice versa. It is typically more important that the boat can be retrieved than that normal operations are always smooth. Thus, although suitable for retrieval purposes, it is preferred that the remote control retrieval device operates sufficiently outside the UHF range to avoid interference with stray signals from other remote UHF devices operating locally. The remote control retrieval and remote control devices can also be operated within the same wave band, *e.g.*, both can operate using a VHF signal component. These are preferably distinct signals even within the same wave band. Preferably, error checking routines can be included in the PLC on the mobile, powered vehicle to minimize or avoid interference with non-control signals.

The marine craft used in each of one set of preferred embodiments of the invention is preferably a Class A motorboat, *e.g.*, having a length of less than about 18 feet. Suitable marine craft include a personal motorboat including a jet ski-type craft (with or without onboard propulsion controls), a passengerless drone motorboat, a sailboat, a windsurfer, or the like. Since the preferred marine craft is arranged and configured to be riderless, or passengerless, other than the user being transported thereby, a fairly small marine craft can be employed thus permitting a relatively smaller engine to be used that provides the same acceleration and maximum speed as a larger craft with a larger engine that carries or otherwise transports two or more passengers. This is particularly true for the marine craft drone embodiment where no person is carried or transported thereby. It should be understood that a propulsion system is sufficiently powerful that it can transport the marine craft hull and associated equipment, and in some embodiments the user, being transported thereby.

The riderless marine craft, such as personal motorboat or drone motorboat, preferably does not include its own set of hardwired controls. Rather, the controls are preferably operatively associated in wireless, remote fashion for operation by the user. Optionally, handlebars and other controls can be included on the marine craft so it can be ridden by a passenger, such as the skier before and after waterskiing. When such controls or handlebars are present, they are preferably adapted and configured to be retractable into a compartment or within an upper hull. This can advantageously minimize the profile of the marine craft against oncoming wind, and reduce the wear and tear from the elements on such optionally present controls. For example, the controls can fold underneath a seat for an optional passenger in certain embodiments where the hull is adapted for an onboard passenger.

The marine craft can have any suitable hull for a class A marine vehicle, preferably one that is adapted and configured to provide suitable turning ability without transverse slippage of the craft. In one preferred embodiment, the hull has a bottom portion including starboard and port sponson portions and a central tunnel portion. When the marine craft includes an inboard propulsion device, such as a pump or other jet-propulsion device, the hull also preferably includes a propulsion water discharge portion having a water discharge opening portion that is substantially centered across a width of the hull transverse to the direction of forward marine craft movement. Multiple discharge portions can be included, preferably positioned and dimensioned so that they are on average substantially centered. Substantially centered preferably refers to within about 10 percent, preferably about 5 percent, of the width. Each water discharge opening typically includes at least one multiple directional nozzle positioned about the substantially centered propulsion water discharge portion.

Preferably, the marine craft can further include a collision avoidance device or system, which can assist the marine craft in avoiding one or more other objects such as fallen timber or other floating debris, floating crab traps, other marine craft or larger vessels, sand bars, swimmers, alligators or crocodiles, rocks above and below water, piers, docks, or other accident- or damage-causing objects commonly found in and around bodies of water. Typically, the collision avoidance device includes radar adapted and configured to detect the location and speed of each object in a traveling path of the marine craft, and an automatic propulsion control device that receives the location and speed information from the radar and is configured and adapted to automatically control the speed and direction of the propulsion device to avoid each obj ect in the traveling path of the marine craft. The radar can be any suitable radar, such as Doppler radar. "Radar" is also meant to include acoustical (e.g., sonar) detection, although preferably just radar is encompassed by the term. The collision avoidance device preferably can override any control signals to ensure that objects are avoided and to prevent a careless user from continuing on a path towards an object that is best avoided.

The traveling path typically means any direction and location which the marine craft could reach at its current speed even if the heading changed. Preferably, the traveling path includes an arc of at least about 180 degrees centered on the direction of travel at any given time. In other embodiments, the arc of the traveling path covered by the collision avoidance device includes arcs of at least about 120 degrees, 90 degrees, or 60 degrees along the current traveling path.

The automatic propulsion control device will preferably include a kill switch, or be operatively associated with the user's kill switch, so that the propulsion system can be deactivated in sufficient time for the marine craft to coast to a sufficiently slow speed, or preferably a complete stop, before colliding with an object in the traveling path. Even if the marine craft collides with an object, the user is generally at least about 10 feet further behind or at another rearward angle from the marine craft, which provides an additional safety cushion. In another embodiment, the propulsion control device can automatically deactivate or reduce the speed of the propulsion system (or even reverse the engine direction) in connection with steering or otherwise directing the marine craft in as minimal a direction change as possible so as to avoid colliding with the detected object, or the risk of colliding with the detected object. Preferably, the collision avoidance device is adapted to detect and respond to other moving objects as well as stationary ones, and the propulsion control device typically includes a PLC or other computing device to receive and calculate position and speed information concerning other objects to determine the proximity thereof, and transmit control direction to the propulsion device or system, sufficiently rapidly to account for other moving objects.

The marine craft system can advantageously be arranged so that the remote user, if any, includes a water-skier and the propulsion device includes an inboard jet-pump engine combination. A flexible connector device, such as tow rope, is generally used to connect the marine craft to the water-skier or a ski device. The flexible connector device, is attached at a first end to the marine craft and is disposed adjacent the user at a second end. It can, for example, be attached to an opposite end of a handle that the user grasps during operation. Alternative embodiments include attaching the second end to a harness disposed about a portion of the user, a ski chair at the second end in which the user can sit, an inner tube, a surfboard, sky ski, knee board, or any combination thereof. The attachment can optionally be releasable, such as upon sufficient force or upon the user falling off or down in the water, to help minimize accidents. The remote control device is generally maintained a sufficient distance from the operating propulsion system for safety purposes. Preferably, the marine craft system remains at least about 10 feet apart from the remote control device during operation of the jet-pump engine combination or other propulsion device. The remote control device is generally associated with, preferably disposed adjacent to, a handle, a harness, or ski chair, or worn by the user, or any combination thereof.

The handle associated with the remote control device, or associated with the mobile, powered vehicle to transport the user, can be any suitable shape available to those of ordinary skill in the art. Preferred handles include marine grade, substantially or entirely rust-free metals (including aluminum and stainless steel), molded thermoplastic or thermoset materials, or any carbon-based composite, such as KEVLAR®. The handle is preferably in a clamshell or arc shape. The materials are preferably molded conventionally or injection molded, including reaction-injection-molding.

If the remote control device is disposed adjacent a handle or otherwise attached to the connection device to the marine craft, it is preferably configured and adapted to be grasped by at least one hand. The remote control device typically includes separate controls for each function that is desired to be remotely controlled in the associated mobile, powered vehicle. The remote control device preferably includes a kill switch; turn controls, such as left and right; and a throttle to control the speed, such as speed up and speed down switches in pre-set increments, such as 5 nautical miles/hr. The turn controls can be configured, *e.g.*, to turn a pre-set number of degrees in the direction selected, *e.g.*, about 5 to 10 degrees per contact with the turn control, or one time for a large radius turn and two or three times for a tight radius turn. The opposite side turn control can be arranged to negate a portion or all of the previous turn in the opposite direction. Preferably, when used in connection with a user being transported remotely by the marine craft, the kill switch is configured to be automatically activated when either one or both hands, as desired, release the remote control device, when the kill switch is manually triggered as desired, or both. Additional preferred controls include: a 1-button/switch starter to initiate the propulsion device (*e.g.*, this the same control as a manual kill switch, but which acts as a started when the propulsion device is off); a warning component control to manually raise or lower the antenna or other device onto which a skier-flag down or other related flag can be attached or to activate or deactivate warning light(s) or sound(s); a trim up and down control to facilitate turning control of marine craft, optional marine craft lights on and off to help the user see during periods of low light (*e.g.,* sunrise, sunset, eclipses, clouds), propulsion system on or off, or any combination of these or any other control devices mentioned herein.

The remote control device can be any object, such as a handlebar, wearable object such as on a hat, shirt, wetsuit, belt, backpack, ski chair, harness, or the like. The remote control device can also be operatively associated with any attachment device to help position it adjacent a user, including one or more clips, claws, stretchable cords, hooks, or any combination thereof. For example, a plurality of hooks can be permanently affixed to one or more stretchable cords, *e.g.*, elastic, and these can be used to retain and position the remote control device on a user's life jacket or other flotation device. Preferably, the remote control device is configured and adapted to be held in the user's hand, such as a handlebar. In general, the remote control device should be readily accessible to the user even while the user and device are being transported by the marine craft or other mobile, powered vehicle. When used in marine environments, such as in connection with a marine craft, the device is generally operatively associated with flotation materials and external waterproofing materials sufficient to maintain the remote control device at least essentially free of water and floatable in case it falls into water. Preferably, it is designed to be easily located if lost, such as including bright colors on an outer portion thereof or containing an audible or visual alarm that activates after a pre-determined time, *e.g.*, more than 10 minutes, of not being moved while it is activated, or of being disposed in an aqueous environment, such as dropped in water, or both. When used in connection with marine craft or in marine environments, the control device preferably will be visible above the waterline such as by including sufficient flotation materials.

The mobile, powered vehicle, *e.g.*, marine craft, includes a wireless receiving device that is generally associated with a removable component, *e.g.*, a daughter board, that releasably and electrically connects into a pre-wired electrical control system associated with the propulsion system. The removable component generally is operatively associated with a motherboard or other pre-programmed control logic to provide a variety of added features that can be repaired in a location remote from the vehicle and upgraded through simple replacement of the removable component with a new one having different functionality. The removable component is preferably programmable, or pre-programmed, or both.

The removable component preferably further includes one or more indicators, such as LEDs or a liquid crystal display, that can be adapted and configured to provide a diagnostic capability to the marine craft or other vehicle. The indicator(s) can be arranged to generate easily readable numbers or letters, or a code reader can be included with the removable component if desired, so that a remote technician can determine the problem and provide suitable instructions for repair or the like. Preferably, the handle or a remote control device can be adapted to plug directly into the removable component to provide this indicator to display information regarding malfunctioning or otherwise broken components on the mobile, powered vehicle of the invention. This also permits remote selection and shipping of parts for repair of the remote control system, remote retrieval system, or any portion of the marine craft or other mobile vehicle without need to ship or otherwise transport the marine craft or other parts to a repair shop. Preferably, each electrical component, and more preferably every component, on the marine craft or other mobile, powered vehicle, is easily connectable by, *e.g.,* plugging components together or into pre-defined ports on the physical structure of the vehicle. This advantageously provides significant flexibility for users, who can be overnight expressed parts for removal and replacement.

Another feature that can be included, such as part of the daughterboard/removable component programming, include steering compensation to automatically have the marine craft or air craft compensate for lateral sliding when the craft is sharply turned in either direction. Yet another feature includes speed presets, so that a plurality of the mobile, powered vehicles can all be preset to a particular speed, or particular speed maximum, as desired, to provide a uniform vehicle for use in competitions. Since each water-skier or other user has the same maximum speed, for example, various skiers can compete at the same time while a more objective basis for judging a competition is advantageously achieved. Similarly, the removable component can be programmed to set a speed cap that is sufficiently slow that children can use the device with decreased, minimal, or no supervision depending on the age and trustworthiness of the child. This can permit a child to learn how to water-ski at a reasonable rate of speed without accidentally going too quickly.

Advantageously, the removable component, such as a daughterboard, is sized and dimensioned to fit conveniently in a small compartment aboard the mobile, powered vehicle. The daughterboard can be any desired shape, but is often square or rectangular to substantially correspond to the circuit board disposed therein. The size is typically from about 1 to 6 inches in length, preferably from about 2 to 4 inches in length; from about 0.75 to 3 inches deep; and from about 0.125 to 1 inch in height. A metallic or heat-conductive plastic can be included and operatively associated with the daughterboard to remove a sufficient amount of heat to minimize or avoid the risk of fire or melting the control-related equipment of the mobile, powered vehicle of the invention. The main PLC into which the daughterboard is typically electrically connected preferably includes various optional plugs or ports into which a more complicated daughterboard or multiple removable component can be operatively associated at a later date after commercial sales of the mobile, powered vehicle.

A preferred embodiment of using the mobile, powered vehicle of the invention includes water-skiing, particularly skiing solo. Other preferred embodiments include use of the vehicle as a drone for pollution sampling, fire suppression, military support including mine clearing, life boat drone, target practice, and the like. In the skiing solo embodiment, the method includes a skier wirelessly transmitting from a skier-operated remote control device one or more control signals, generally in the very low frequency band, low frequency band, medium frequency band, high frequency band, very high frequency band, super high frequency band, extremely high frequency band, the infrared radiation band, or a combination thereof, and having an operatively associated marine craft receiving and executing the signals to control the marine craft having a hull and a propulsion device so that the user exclusively controls and is transported by the marine craft.

In the mine-clearing embodiment, the drone vehicle is preferably sufficiently armored to protect the propulsion system so that it can be retrieved for further use. Optionally, and preferably, the drone vehicle can be economically designed for land-based or sea-based mine clearance so that frequently destroyed vehicles are an acceptable casualty in exchange for ensuring the safety of nearby mammals, such as persons, or other animals. Thus, the goal-specific equipment can optionally include metal or explosives detection equipment, and the vehicle is pre-selected to have sufficient weight sufficiently to approximate the weight of a few persons or a light vehicle that might otherwise trigger the mine. The drone vehicle can be sent to ensure a safe path for the user or others affiliated with the user, and if it is destroyed in the line of duty then a plurality of others are preferably waiting nearby to be called into action.

The drone vehicle can also be used for target practice, such as for small arms fire insufficient to penetrate the armor on the vehicle. In this embodiment, the vehicle includes sensors or other devices to determine if the vehicle is struck, *e.g.*, a flashing light. The drone vehicle can also be used for target practice for artillery, mortar, or bombs, where the drone may be or is intended to be destroyed upon a sufficiently close shot.

The invention also includes a solo waterskiing kit that includes a marine craft having a hull and a propulsion device and a wireless receiving device adapted and configured to receive a signal component that controls the propulsion device, a remote control device for wirelessly and remotely transmitting the signal component which is selected from the group consisting of one or more signals in the very low frequency band, low frequency band, medium frequency band, high frequency band, very high frequency band, super high frequency band, extremely high frequency band, the infrared radiation band, and a combination thereof, a flexible tether of sufficient length to permit the skier to connect to the marine craft and of sufficient strength to permit waterskiing by the skier, and a handle connected to the flexible tether which the skier grasps, wherein the remote control device is disposed on or adjacent the handle. The kit can preferably include a ski apparatus, such as one or more water skis, a ski chair, a ski board, or a combination thereof. The tether can be of differing lengths depending upon the type of mobile, powered vehicle and the activity in which the user is engaged. For water skiing, a tether of approximately 40 feet can be used compared to a traditional 75 foot tether. For parasailing, a longer tether can be used if desired.

The invention also encompasses a remote, user-operated mobile, powered drone vehicle, preferably a marine craft drone system, that includes a marine craft drone (or other vehicle) that includes a propulsion device and a wireless receiving device adapted and configured to receive a radio-frequency-based signal component that controls the propulsion device and a goal-specific device, a chassis or hull sized sufficiently to contain the propulsion device and the goal-specific device but insufficiently sized to carry a person, and a remote control device that is operatively and wirelessly associated with the marine craft (or other vehicle) and that transmits the signal component. It should be understood that the terms "marine craft," "hull," and the like, as used herein to refer to nautical apparatuses of the invention, can also include and are meant to refer to other mobile, powered vehicles having a chassis or airframe, as well. The marine craft having a hull is a preferred mobile, powered vehicle, and thus, this terminology is used throughout the specification to refer to any mobile, powered vehicle having a hull, chassis, or airframe.

Exemplary goal-specific devices include a plurality of containers adapted and configured to collect and retain a plurality of water samples from adjacent the marine craft (or soil or air samples from adjacent a land-based or air-based vehicle), or an attitudinally-inclinable nozzle operatively associated with a pump capable of collecting water from adjacent the marine craft and directing it through the nozzle in an upwardly inclined fashion at an adjacent work surface. The water source must contain sufficient water to facilitate extinguishing a fire in, on or around a physical structure such as a building, or a tree, for example. The nozzle is preferably associated with a radio controlled turret or other rotating device(s) and/or elevating device(s) to facilitate directing water onto a fire. The pump and nozzle are preferably of sufficient power and diameter to facilitate fire suppression when the adjacent work surface includes a burning object, and thereby convert the drone into a fire boat. Similar kits besides a water-skiing kit can be envisioned for other uses described herein or not, and the goal-specific equipment is preferably designed to be readily removable and to be easily connected to the electrical and control systems on board the vehicle as desired.

In the fire suppression mode, the marine craft is preferably constructed out of high-temperature resistant materials, *e.g.*, the Kevlar® class of materials, carbon-fiber-reinforced composites, or the like, or any combination thereof. This can advantageously permit the marine craft to approach more closely to fires than conventional fire boats or other vehicles that typically require one or more persons on board for proper operation. The smaller size of a passengerless marine craft advantageously permits such craft to squeeze through a marina or other water passageway of exceedingly small size that a conventional boat could not. The remote control device in this embodiment is adapted and configured to permit control of the inclined nozzle, which can be angled to a desired incline to facilitate fire extinguishing. The hull and propulsion system of the marine craft in this embodiment is adapted and configured to minimize movement during operation of the nozzle that directs water onto the fire or adjacent work surface. For example, a keel or other plate can be lowered that is transverse to the direction of travel of the boat to minimize the backward movement when the nozzle is operating, or an amount of water equal can be directed backwards to provide an equal forward and backwards force to help retain the boat in a substantially fixed position while helping to extinguish the fire. A pair or more of intakes could alternatively be used, where one directs water through the nozzle to fight a fire, while the other directs water flow in a rearward direction to facilitate stabilization of the marine craft. A pair of jet drives could be used for this purpose, as well, but preferably, the same pump or other system that drives the propulsion device can be used to help direct water through the nozzle, and preferably concurrently in an opposite direction for stabilization of the marine craft.

The same type of fire-fighting craft adapted and configure for land operations could also be used for fighting dangerous land fires, although there is less concern about rearward shifting of the craft since it can stabilize itself through contact with the ground or other stable surface while water is being expelled in a direction at a fire. Of course, a water supply will be needed for such a land-based craft, so a suitable hose will need to be connected before the land-based craft is sent in to fight a fire.

Other types of goal-specific devices can include one or more cameras or other suitable imaging systems for surveillance or other monitoring purposes, and metal or explosives detection equipment. It should be understood that any combination of goal-specific devices described herein is envisioned. For example, a marine craft including a collision avoidance system or device can be coupled with an imaging system to be used for semi-automated, remote surveillance or monitoring. In this embodiment, a user can guide a marine craft to a desired zone and then activate the surveillance systems to automatically search a pre-defined or pre-set pattern or simply to follow a coastline or dock area. The marine craft in this embodiment should include a collision avoidance device at least for automated operations, and preferably includes a CPU or other programmable control logic that permits it to travel beyond the range of remote user control to follow this pre-defined or pre-set pattern on its own in automated fashion. After a pre-set period of time or a pre-set condition, the marine craft can be adapted and configured to either return to the desired zone until the remote control device can reacquire control, travel in a path toward the transmission site of the last known control signals until control is reacquired, or even send a location signal via any suitable transmission method or signal component. Thus, even if the marine craft is too far for effective remote control, it may still be able to signal the user or other persons (*e.g.*, the Coast Guard, life guard, military personnel, *etc.* ) of a specific pre-defined condition. Preferred pre-set conditions can be locating a person in water (*e.g.*, useful for search, rescue, and retrieval operations), locating an object that is at least substantially similar to a pre-defined image, radar, or sonar match (*e.g.,* the object can be a desired type of airplane, helicopter, submarine, mine, or other object that it is desired to locate), or the like, or any combination thereof.

The vehicle can be a marine craft adapted and configured to operate as a life boat, to expedite sea-based rescue of persons in need of assistance in the water. Time is typically of the essence when rescuing drowning, freezing, or other persons in the water needing rescue. In this embodiment, the craft can be anchored offshore, *e.g.,* about 10 to 300 feet, or kept adjacent a pier, dock, or rock jetty, and it can be adapted to have a plurality of grasping portions arrayed about a portion of the craft. These grasping portions can simply be projections that a swimmer or other person in need of rescue can grasp, and they preferably include a sufficient type and amount of padding to avoid injuring the rescued person. A remotely located lifeguard on shore or in another boat can, after determining a person is in need of assistance, rapidly activate the marine craft and direct it to a location adjacent the person. If the person is conscious, they can grasp the marine craft and the guard can gently direct the craft adjacent a location where the person becomes safe, *i.e.*, either directing the craft onto a beach or nearby land, or close enough so that a person on land or in a nearby boat can help the person to safety. Optionally, the goal-specific device can include a grasping device to help grab an unconscious person in the water, or a net or personal flotation device that can be directed to the person in need of rescue if the marine craft cannot otherwise get close enough for the person to grasp a projection or other grasping portion.

Preferably, a goal-specific device aboard the mobile, powered vehicle, such as a marine craft, includes a collision avoidance device that assists the vehicle to avoid one or more other objects. The collision avoidance device includes radar adapted and configured to detect the location and speed of each of the one or more objects in a traveling path of the marine craft, and an automatic propulsion control-device that receives the location and speed information from the radar and is configured and adapted to automatically control the speed and direction of the propulsion device to avoid each object in the traveling path of the marine craft.

The invention also encompasses a remote control retrieval device that includes a wireless radio frequency emitter that transmits a homing signal associated with automatic retrieval of a mobile, powered vehicle, and an initiation trigger that initiates the homing signal upon the occurrence of at least one pre-selected condition. The homing signal can use any radio frequency, but it preferably differs in frequency from an operatively associated remote control device sufficiently so that other nearby remote control devices will not interfere with the homing signal, and vice versa. In one preferred embodiment, the remote control device and the homing signal use UHF and VHF signals, and vice versa. Preferably, the remote control device uses VHF for operation at a roughly stable distance from the mobile, powered vehicle, while the remote retrieval device employs UHF to operate over a greater distance sufficient to facilitate retrieval of an errant craft. The range of operation of the remote control device and/or remote retrieval device will vary depending on the desired use of the mobile, powered vehicle. When a marine craft is used for water-skiing, the remote control device can generally operate over about 10 to 150 feet and the remote retrieval device can generally operate over about 10 feet to 1 nautical mile. When the vehicle is used for mine clearing, either on land or in the sea, the devices should both operate at a minimum distance that is sufficiently safe to any user operating the mobile, powered vehicle.

The invention also includes a remote control retrieval system that includes the remote control retrieval device and a mobile, powered vehicle that includes a marine craft having at least one hull (or other suitable vehicle) and that is adapted and configured to receive the homing signal and propel itself toward the homing signal at a safe, sufficiently slow rate of speed. The propulsion system generally operates at an idle state (for land- and marine-based vehicles) during retrieval to propel the mobile vehicle at a sufficiently slow speed to ensure a user adjacent the homing signal remains safe. For airborne vehicles, the speed is of significantly less importance, and in fact, too slow a speed is likely to cause a stall and result in a crash. The vehicle is adapted and configured to, upon a pre-selected condition, activate or maintain an active propulsion system with sufficient power to return the vehicle to within a pre-selected distance from the homing signal. This pre-selected distance will vary depending on the desired use and the type of vehicle, but can be at least about 10 feet for a marine craft, at least about 3 feet for a land-based vehicle, and at least about 100 feet for an air-based vehicle that will require a landing location. The propulsion system is preferably deactivated when the mobile vehicle reaches the pre-set distance from the homing signal. In one preferred embodiment, the mobile vehicle is a marine craft and the propulsion system includes an inboard jet-propulsion device, *e.g.*, one or more jet-ski engines.

The remote retrieval device advantageously permits the user to manually or automatically ensure the mobile, powered vehicle is recalled to a nearby location, preferably adjacent the user. The ability to retrieve, or recall, the marine craft can avoid or minimize the expense of replacing a lost or damaged marine craft, which is particularly important if the user is a significant distance from a desired destination and the mobile, powered vehicle is the most convenient form of transportation at hand, or if the vehicle itself is in danger from an enemy combatant, a fire, or other danger. In a preferred mode, the pre-selected condition includes a water-skier-down event or a skier-initiated event to return the marine craft to a pre-set distance from the homing signal.

The remote retrieval device preferably includes an attachment device associated therewith that permits a user to securely attach the device to the user's body or clothing, *e.g.*, so it can be worn. The same attachment devices for the remote control device can be associated with the remote retrieval device, although preferably the remote retrieval device is securely attached to the user's body or clothing so it does not readily become separated unless the user intends it. The remote retrieval device can be activated by any suitable mechanism or means available to those of ordinary skill in the art, such as by being manually triggered by the user if the user is in danger, simply elects to do so, or is otherwise separated from the vehicle being used to transport the user. Alternatively, it can be adapted and configured to automatically activate upon a pre-selected condition. The pre-selected condition can include being activated after a pre-set period of time, *e.g.,* at least about 3 minutes, 5 minutes, or 10 minutes, without user initiated-input or upon an event trigger, such as becoming wet after falling into water or striking a surface such as falling onto the ground from a pre-set height, *e.g.,* from at least about 3 feet, 4 feet, or 5 feet. It can also be arranged to activate when an associated control signal, such as from the remote control device, after the associated signal is no longer being operated for a pre-set period of time.

The remote retrieval device is preferably adjacent the user, however, it can be located in part on the vehicle itself. If the vehicle no longer receives control signals for a sufficient, pre-set period of time, depending on the application or use thereof the vehicle can direct itself toward the direction of the last prior control signals received to increase the likelihood of the user regaining control thereof. These remote retrieval embodiments can pose a potential safety risk of the vehicle colliding with an object, particularly when the vehicle is land-based, and for this reason the vehicle preferably includes a collision avoidance device when the remote retrieval device is operatively associated therewith.

There are two preferred embodiments associated with the remote retrieval device, and methods of using the same, when the user is separated from the marine craft and triggers the remote retrieval device. In the first preferred embodiment, the user engages a starter control on the remote retrieval device that is received by the receiving device on the marine craft so as to activate the propulsion device. The user then steers the craft using steering controls (*e.g.*, a miniature wheel, joystick, left/right control buttons, or the like) back towards the user. The user can use an optional kill switch to deactivate the propulsion system once it reaches a pre-defined distance from the remote retrieval device. In the second preferred embodiment, the trigger is an activated homing signal of one or more frequencies sent by the remote retrieval device that is received by the receiving device on the marine craft. The PLC or other computing system onboard the marine craft is arranged so that the homing signal activates the propulsion device and directs the marine craft to automatically steer itself at a preset speed, *e.g.*, at an idle state, to a pre-defined distance from the homing signal at which time the propulsion system is automatically deactivated, which pre-defined distance is sufficiently close for the user to readily swim to or otherwise reach the marine craft. In each embodiment, the pre-defined distance can be about 10 to 40 feet, as the marine craft will generally continue to coast even after the propulsion device is deactivated. Also in each embodiment, the marine craft preferably includes a collision avoidance device onboard that is operatively associated with an automatic kill switch when the collision avoidance device detects the user as an object to be avoided. In each embodiment, no throttle or speed controls are necessary, although they can optionally be provided.

Particularly in the more automated second preferred embodiment, the homing signal is preferably operates at a fixed amplitude. Different embodiments including signal strength or priority checking, or both, can be used to facilitate the automated control to retrieve the marine craft. As with all remote, wireless signals transmitted according to the invention, *e.g.,* remote control device control signals, remote retrieval device control signals, and homing signals, the signals here can be encrypted using any available encryption techniques, methods, algorithms, or the like to minimize or prevent an unauthorized third party from activating any features or from taking control on the marine craft or other vehicle. The marine craft can return toward the homing signal or control signals from the remote retrieval device while periodically comparing the signal strength of signals sent to the craft and reply signals returned by the marine craft. By comparing the decreased degradation in signals as the sources approach each other, or through any other suitable methods, the remote retrieval device can determine the distance between the marine craft and the signals from the remote retrieval device. This advantageously helps the user control the marine craft even when no collision avoidance device is onboard or if a collision avoidance device is present but malfunctioning.

The invention also includes a method of remotely retrieving a mobile, powered vehicle, by transmitting a radio frequency-based homing signal upon the occurrence of at least one pre-selected condition, wherein the homing signal is associated with a mobile, powered vehicle, and automatically activating, or maintaining an operating, propulsion system associated with the mobile vehicle to move the mobile vehicle toward the homing signal.

The invention also encompasses a wireless, remote control article including a remote control device having a plurality of controls that is adapted and configured to be disposed adjacent to a user's hand and that is operatively and wirelessly associated with a mobile, powered vehicle that transports the user, wherein the remote control device transmits one or more signal components using one or more radio frequencies when each of the controls is operated. Preferably, the article is a handlebar or other handheld object that facilitates transport of the user by the mobile, powered vehicle and the remote control article includes switches, buttons, or the like at a readily accessible location thereon or therein during user transport. Preferred controls include speed, direction, and failsafe controls to operate the mobile, powered vehicle when the user is being transported thereby. Other suitable controls can be envisioned as described herein (*e.g.*, nozzle up/down control for extinguishing fires; water, air, or soil collection initiation for pollution analysis).

The controls preferably include a user-initiated warning component associated with at least an aural or visual signal adjacent the mobile vehicle, a user-initiated fire suppression component associated with a fire suppression system aboard the mobile vehicle, or a combination thereof. The aural or visual signal can help warn others of an incapacitated user, such as a skier down or an injured user, as well as facilitating collision avoidance. The user-initiated fire suppression component can include an activation control for a fire extinguisher or the like on board the powered vehicle. Optionally, an automatic fire suppression system can be included on board the vehicle. But in a preferred embodiment, a simple fire suppression system can be installed that can be automatically or manually activated, or even removed from a storage compartment by a user for use in suppressing a nearby fire that does not endanger or relate to the mobile vehicle. The fire suppression device is preferably directed into the propulsion system and/or fuel tank of the mobile vehicle, as fire is most likely to occur within the vicinity of those components.

Indeed, the mobile, powered vehicle can include a plurality of safety devices on board. In the marine context, for example, the marine craft preferably includes at least a flare gun and a siren, lights, horn/sound, or a combination thereof. Preferably, visual and audio are included in the safety devices on board. A fire suppression system, such as a fire extinguisher, is preferably also included. This can be positioned in the same water-proof compartment, and it is preferably positioned to direct fire suppression materials into the engine compartment in the event of fire as discussed herein.

In every embodiment of the invention relating to marine craft or adjacent water-based environments, the remote control article preferably further includes a flotation material and external waterproofing material each sufficient to maintain the remote control device at least essentially free of fluids and floatable on adjacent fluids, such as water.

The invention further encompasses a user-transporting, remote operation system that includes a wireless, remote control article that includes a remote control device that is adapted and configured to be disposed adjacent to a user's hand and that is operatively and wirelessly associated with a mobile vehicle including a propulsion device that transports the user, wherein the remote control device transmits a signal component using one or more first radio frequencies, and a remote control retrieval device that includes a wireless radio frequency emitter that transmits a homing signal associated with automatic retrieval of the mobile, powered vehicle and an initiation trigger that initiates the homing signal upon the occurrence of at least one pre-selected condition. Preferably, the remote control retrieval device is configured and adapted so that the propulsion device of the mobile vehicle will direct the vehicle to a pre-determined distance from the homing signal and automatically cease operation.

In other embodiments, the mobile, powered vehicle is adapted and configured to receive an opposing shaped, complementary vehicle that contains suitable controls for movement or other desired activities and that contains sufficient seats for any number of desired passengers. The controls in the complementary vehicle operate the propulsion system and any other features present in the mobile, powered vehicle. Thus, the drone or passengerless vehicle of the invention can be readily converted into a full vehicle such as a boat or land-based motorized vehicle that can transport passengers.

The term "about," as used herein, should generally be understood to refer to both numbers in a range of numerals. Moreover, all numerical ranges herein should be understood to include each whole integer within the range.

By "wirelessly," it is meant that no electrical signals are transmitted by wire to the powered vehicle, such as a marine craft, and preferably to or from the marine craft. Thus, a flexible tether or the like that helps a powered vehicle transport a user but that does not send control or other signals to or from the user is still wireless according to the invention.

The terms "lanyard" or "kill switch," as used herein, are each intended to refer to a device that operates, *e.g.,* to open or close a circuit, to terminate operation of the propulsion system of the operatively associated marine craft. This kill switch can include a manually triggered or rocker switch; a clamp, clip, or loop that attaches to a user of the remote control device so that the propulsion terminates automatically when the user is separated therefrom or releases a grip or handle thereon; or the like; or any combination thereof. For example, the kill switch can extend from a tow handle and be affixed to a user's flotation device or clothing, or it can connect from one or both of a user's skis to one or both ankles so that it is activated if the ski(s) are removed or otherwise separated from a user's foot or feet.

The term "task," as used herein, refers to a real-world result that accomplishes a goal typically requiring human intervention. Preferably, the task involves an activity dangerous to human safety, including but not limited to, handling polluted samples, surveillance, search and rescue operations, extinguishing fires, clearing mines, or acting as a mobile target for ordnance. The goal-oriented equipment is typically selected to be operatively associated with the pre-selected task, e.g., a nozzle and associated pump that are each sized and dimensioned sufficiently to extinguish a fire on an adjacent work surface, one or more sensors or sample collectors for pollution analysis or testing, an automatic anchor to hold the marine craft substantially still during operation for fire extinguishing or while awaiting a life-saving command, or the like.

Although preferred embodiments of the invention have been described in the foregoing description, it will be understood that the invention is not limited to the specific embodiments disclosed herein but is capable of numerous modifications by one of ordinary skill in the art. It will be understood that the materials used and the mechanical details may be slightly different or modified from the descriptions herein without departing from the methods and articles disclosed and taught by the present invention.

## Claims

1. A remote user-operated, user-transporting marine craft system comprising:
a marine craft having a hull that is moved through water using a propulsion device and comprising a wireless receiving device adapted and configured to receive a signal component that operates and controls the propulsion device; and
a remote control device that is operatively and wirelessly associated with the wireless receiving device for transmitting a signal component selected from the group consisting of the very low frequency band, low frequency band, medium frequency band, high frequency band, very high frequency band, super high frequency band, extremely high frequency band, the infrared radiation band, and a combination thereof,
wherein the user controls movement of and is transported by the marine craft using the remote control device to generate and transmit the signal component to the receiving device to operate and control the propulsion device.

2. The marine craft system of claim 1, wherein the remote user is a water-skier, the propulsion device comprises a jet-pump engine combination, and the remote control device and marine craft are positioned at least about 10 feet apart during operation of the jet-pump engine combination.

3. The marine craft system of claim 2, wherein the user is connected to the marine craft by a flexible connector device attached at a first end to the marine craft and adjacent the user at a second end, and wherein the connector device further comprises a handle at the second end which the user can hold, a harness disposed about a portion of the user that is releasably connected to the second end, a ski chair at the second end in which the user can sit, or a combination thereof.

4. The marine craft system of claim 2, wherein the remote control device is grasped by at least one hand and comprises a kill switch, left and right turn controls, and a throttle to control the speed, wherein the kill switch is configured and adapted to be automatically activated when the at least one hand releases the remote control device, the kill switch is triggered as desired, or both.

5. The marine craft system of claim 2, wherein the hull has a bottom portion comprising starboard and port sponson portions, a central tunnel portion, a propulsion water discharge portion having a water discharge opening portion that comprises at least one multiple directional nozzle and that on average is substantially centered across a width of the hull transverse to the direction of forward marine craft movement.

6. The marine craft system of claim 2, wherein the remote control device is operatively associated with flotation materials and external waterproofing materials sufficient to maintain the remote control device at least essentially free of water and floatable.

7. The marine craft system of claim 2, wherein the wireless receiving device is associated with a removable component that releasably and electrically connects into a pre-wired electrical control system associated with the propulsion system, and wherein the removable component further comprises one or more indicators that can be adapted and configured to provide a diagnostic capability to the marine craft.

8. A remote user-operated, user-transporting marine craft system comprising:
a marine craft having a hull that is moved through water using a propulsion device and comprising a receiving device adapted and configured to receive a signal component that operates and controls the propulsion device;
a control device that is operatively and wirelessly associated with the receiving device for transmitting a signal component, and a combination thereof;
a collision avoidance device that assists the marine craft to avoid one or more other objects and that comprises:
radar adapted and configured to detect the location and speed of each object in a traveling path of the marine craft; and
an automatic propulsion control-device that receives the location and speed information from the radar and is configured and adapted to automatically control the speed or direction, or both, of the hull to avoid each object in the traveling path of the marine craft,
wherein the user controls movement of and is transported by the marine craft using the control device to generate and transmit the signal component to the receiving device to operate and control the propulsion device.

9. A method of water skiing solo which comprises remotely controlling movement of the marine craft system of claim 2 that is transporting a water skier by wirelessly transmitting from a skier-operated remote control device one or more control signals in the very low frequency band, low frequency band, medium frequency band, high frequency band, very high frequency band, super high frequency band, extremely high frequency band, the infrared radiation band, or a combination thereof, to control a propulsion device that provides movement to the marine craft so that the user exclusively controls movement of and is transported by the marine craft.

10. The method of claims 2 or 9, wherein the very low frequency band is from about 3 kHz to 30 kHz, the low frequency band is from about 30 kHz to 300 kHz, the medium frequency band is from about 300 kHz to 3 MHz, and the high frequency band is from about 3 MHz to 30 MHz, the very high frequency band is from about 30 MHz to less than 300 MHz, the super high frequency band is from greater than 3 GHz to about 30 GHz, the extremely high frequency band is from about 30 GHz to 300 GHz, and the infrared radiation band is from about 300 GHz to 430 THz.

11. A solo water-skiing kit comprising:
the marine craft system of claim 2;
a flexible tether of sufficient length to permit the skier to connect to the marine craft and of sufficient strength to permit water-skiing by the skier;
a handle connected to the flexible tether which the skier grasps, wherein the remote control device is associated with the handle for operation by the skier; and
optionally, further comprising one or more water skis, a ski chair, a ski board, a trailer adapted and configured for transporting the marine craft on land, or a combination thereof.

12. A remote, user-operated marine craft drone system comprising:
a goal-specific device intended to carry out a task;
a marine craft drone comprising:
a propulsion device for providing movement to the marine craft drone;
a wireless receiving device adapted and configured to receive a radio-frequency-based signal component that controls the propulsion device and the goal-specific device;
a hull sized sufficiently to contain the propulsion device and the goal-specific device wherein the hull is not adapted to carry a seated passenger; and
a remote control device that is operatively and wirelessly associated with the receiving device to transmit the signal component to operate and control the propulsion device to impart movement to the marine craft drone and to operate the goal-specific device.

13. The drone system of claim 12, wherein the goal-specific device comprises a plurality of containers adapted and configured to collect and retain a plurality of water samples from adjacent the marine craft, or an attitudinally-inclinable nozzle operatively associated with a pump capable of collecting water from adjacent the marine craft and directing it through the nozzle in an upwardly inclined fashion at an adjacent work surface.

14. The drone system of claim 13, wherein the pump and nozzle are of sufficient power and diameter to facilitate fire suppression when the adjacent work surface comprises a burning object.

15. The drone system of claim 13, wherein the goal-specific device further comprises a collision avoidance device that assists the marine craft to avoid one or more other objects and that comprises:
radar adapted and configured to detect the location and speed of each of the one or more objects in a traveling path of the marine craft; and
an automatic propulsion control-device that receives the location and speed information from the radar and is configured and adapted to automatically control the speed and direction of the propulsion device to avoid each object in the traveling path of the marine craft.

16. A remote control automatic retrieval device comprising:
a wireless radio frequency emitter that transmits a homing signal associated with automatic retrieval of a marine craft having a hull that is moved through water using a propulsion device; and
an initiation trigger that initiates the homing signal upon the occurrence of at least one pre-selected condition.

17. The retrieval device of claim 16, wherein the homing signal is selected from the group consisting of the very low frequency band, low frequency band, medium frequency band, high frequency band, very high frequency band, super high frequency band, extremely high frequency band, the infrared radiation band, and a combination thereof.

18. The retrieval device of claim 16, which further comprises an attachment device associated therewith that permits a user to wear the device and wherein the pre-selected condition comprises a manual trigger, a release device, termination of an associated control signal, or a combination thereof.

19. A remote control retrieval system which comprises:
the remote control retrieval device of claim 16; and
a marine craft that is adapted and configured to receive the homing signal and comprises a hull that is moved through water using a propulsion device.

20. The retrieval system of claim 19, wherein the marine craft is adapted and configured to, upon a second pre-selected condition, activate or maintain an active propulsion system with sufficient power to return the marine craft to within a pre-selected distance from the homing signal.

21. The retrieval system of claim 20, wherein the homing signal operates at a first radio frequency and an associated remote control device having a control signal, which a user operates to control the marine craft, operates at a second radio frequency that is sufficiently different to minimize or avoid interference between the signals.

22. Use of the remote control retrieval device of claim 16 to remotely retrieve a marine craft automatically to within a pre-set distance, which comprises:
transmitting a radio frequency-based homing signal upon the occurrence of at least one pre-selected condition, wherein the homing signal is associated with the marine craft having a hull that is moved through water using a propulsion device; and
automatically activating, or maintaining the operating, propulsion device to move the marine craft toward the homing signal.

23. The method of claim 22, wherein the propulsion system is deactivated when the marine craft reaches the pre-set distance from the homing signal, and wherein the pre-selected condition comprises a water-skier-down event or a skier-initiated event to return the marine craft to a pre-set distance from the homing signal.

24. The method of claim 22, wherein the propulsion system operates at an idle state during retrieval to propel the marine craft at a sufficiently slow speed to ensure a user adjacent the homing signal remains safe.

25. A remote-control, user-transporting combination comprising:
the marine craft system of claim 14 that remotely transports a user and comprises a hull that is moved through water using a propulsion device; and
a wireless, remote control article comprising a remote control device having a plurality of controls that is adapted and configured to be disposed adjacent to the user's hand and that is operatively and wirelessly associated with the marine craft, wherein the remote control device is capable of transmitting one or more signal components using one or more radio frequencies when each of the controls is operated by the user to operate and control the propulsion system on the marine craft so as to move the marine craft as desired.

26. The remote control article of claim 25, wherein the controls comprise speed, direction, and failsafe controls to operate the marine craft, and optionally the controls further comprise a user-initiated warning component associated with at least an aural or visual signal adjacent the marine craft, a user-initiated fire suppression component associated with a fire suppression system aboard the marine craft, or a combination thereof, and optionally the remote control article further comprises a flotation material and external waterproofing material sufficient to maintain the remote control device at least essentially free of fluids and floatable on adjacent fluids.

27. A user-transporting, remote operation system which comprises:
a wireless, remote control article that comprises a remote control device that is adapted and configured to be disposed adjacent to a user's hand and that is operatively and wirelessly associated with a marine craft that transports the user and comprises a hull that is moved through water using a propulsion device, wherein the remote control device transmits a signal component using one or more first radio frequencies; and
the remote control retrieval device of claim 16 comprising:
a wireless radio frequency emitter that transmits a homing signal associated with automatic retrieval of the marine craft; and
an initiation trigger that initiates the homing signal upon the occurrence of at least one pre-selected condition,
wherein the remote control retrieval device is configured and adapted so that the propulsion device will direct the marine craft to a pre-determined distance from the homing signal and automatically cease operation when reaching that distance.
